# EUROPÄISCHE PATENTSCHRIFT

(11) **EP 1 442 655 B1**
(45) Veröffentlichungstag und Bekanntmachung des Hinweises auf die Patenterteilung: **29.08.2007**
(21) Anmeldenummer: 04001645.3
(22) Anmeldetag: 27.01.2004
(51) Int. Cl.: A01G 9/08, A01G 9/10

(54) **Vorrichtung zum Stecken von Stecklingen**
Device for the planting of cuttings
Dispositif pour planter des boutures

(30) Priorität: 28.01.2003 DE 10303293; 27.02.2003 DE 10361965
(43) Veröffentlichungstag der Anmeldung: 04.08.2004
(73) Patentinhaber: Lanz, Franz, 89160 Dornstadt (DE)
(72) Erfinder: Lanz, Franz, 89160 Dornstadt (DE)
(74) Vertreter: Weber, Gerhard

(56) Entgegenhaltungen:
- DE-U- 29 817 817
- FR-A- 1 438 340
- FR-A- 2 474 271

## Beschreibung

Stand der Technik: Für die neue Produktion von Pflanzen werden abgeschnittene Triebe von Mutterpflanzen, manuell von Hand, in Anzuchtpaletten oder Töpfe mit Anzuchterde gesteckt, um im Treibhaus weiter zu neuen Pflanzen zu kultivieren. Dieses Stecken wird heute noch vorwiegend von Frauen, an Arbeitstischen, durchgeführt. Der manuelle Arbeitsablauf geschieht folgendermaßen: die Person nimmt den abgeschnittenen Trieb (Teilsteckling sogenannte Quirlsteckling, Kopfsteckling, Steckling aus Seitentrieb, sogenannte Federsteckling ), von der Mutterpflanze, schneidet oder reißt diese von Hand auf die gewünschte Länge und steckt diese in die Anzuchtpalette von Hand. Diese Arbeit erfordert ein hohes Maß an Zeitaufwand bis eine Anzuchtpalette mit Stecklingen bestückt ist. Es gibt nach heutigem Stand noch keine Einrichtung, die diese Stecklinge rationell oder automatisch in die Anzuchtpalette stecken kann. Es werden vorwiegend Frauen als Arbeitskräfte für diese Arbeiten eingesetzt.

Erfindungsgemäß wird diese Aufgabe gemäß dem Patentanspruch 1 dadurch gelöst, dass in einer Vorrichtung eine Vielzahl von Stecklingen , z.B. Teilstecklinge, Federstecklinge, Quirlstecklinge, Kopfstecklinge mit einer Aufnahmeeinheit über eine Reihe der Anzuchtpalette genau zugeführt, auf Länge geschnitten und in die Anzuchtpalette gesteckt werden.

Die Vorteile der Erfindung beinhaltet, dass alle Stecklinge immer gleich tief und gleich lang in die Anzuchtpalette gesteckt werden. Für ein gleichmäßiges Wachstum der Jungpflanzen ist dies sehr wünschenswert. Weiter werden alle Stecklinge auf eine einheitliche Höhe geschnitten Es wird durch dieses System eine hohe Stückleistung pro Stunde erreicht Ein humaneres Arbeiten ist für die Arbeitsperson gegeben, weil man nur die langen Stecklinge, in eine Aufnahme des Zuführbandes (Transportband mit Aufnahmen für die langen Stecklinge) steckt.

Ein Ausführungsbeispiel der Erfindung ist in den Zeichnungen dargestellt und wird im folgenden beschrieben:
Fig.1 Vorderansicht und Draufsicht der Maschine
Fig.2 Seitenansicht und Querschnitt des Stecklingklemm - und Schneidsystems
Fig.3 Draufsicht und Querschnitt des Stecklingklemmsystems
Fig.4 Seitenansicht und Querschnitt des Klemm - und Schneidsystems
Fig.5 Takt - und Arbeitssystem bzw. Arbeitsfolge der Vorrichtung für Teilstecklinge 6, Quirlstecklinge oder Federstecklinge
Fig.6 Takt - und Arbeitssystem für Kopfstecklinge
Fig.7 Ausblaseinheit bei Teilstecklinge

Es folgt die Erläuterung der Erfindung, anhand der Zeichnungen nach dem Aufbau der Erfindung:

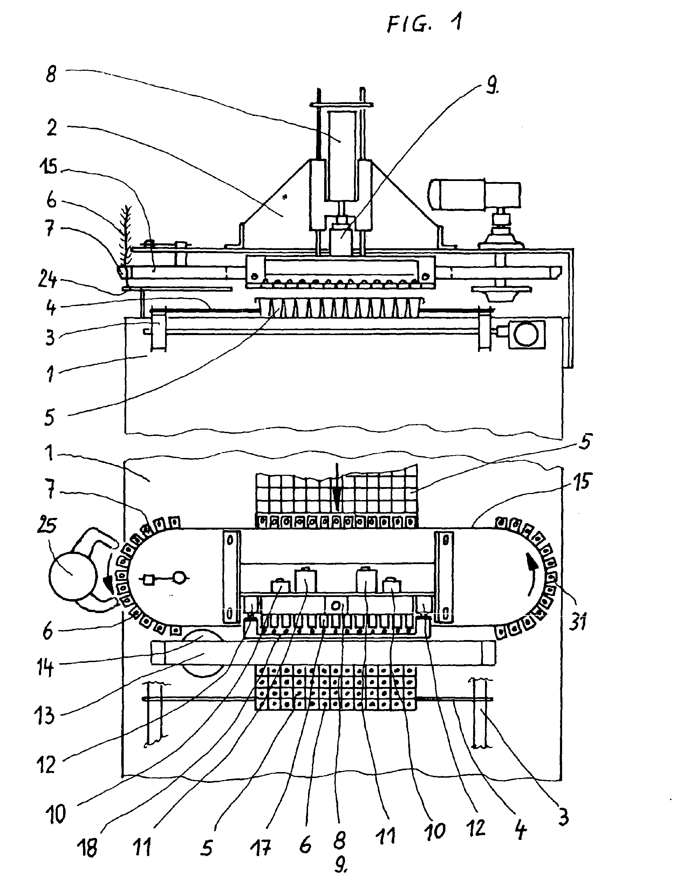

In Fig.1, 2, 3, 4 wird gezeigt: das gesamte technische System

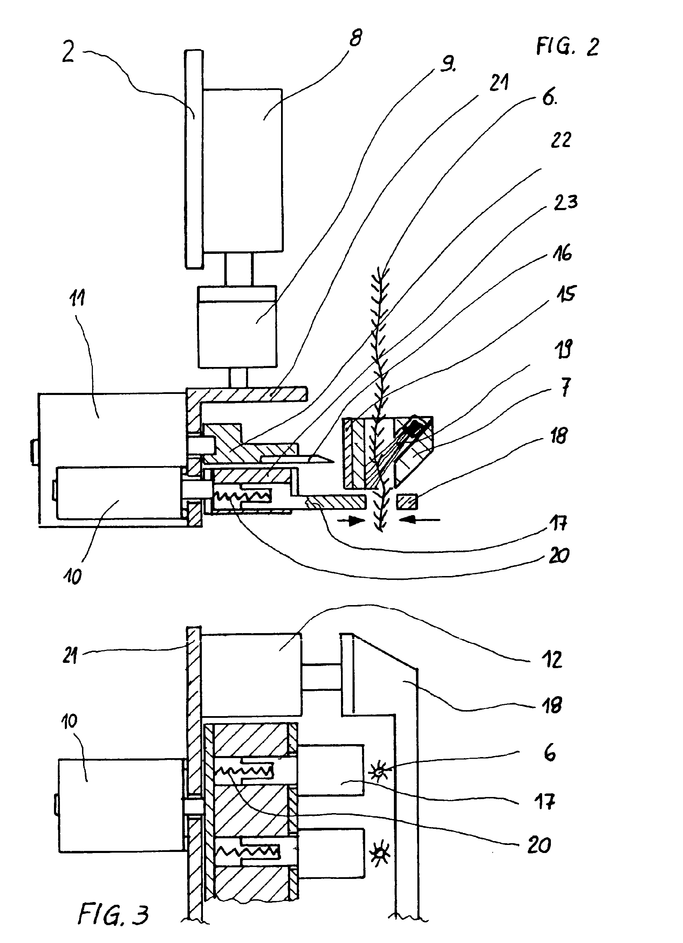

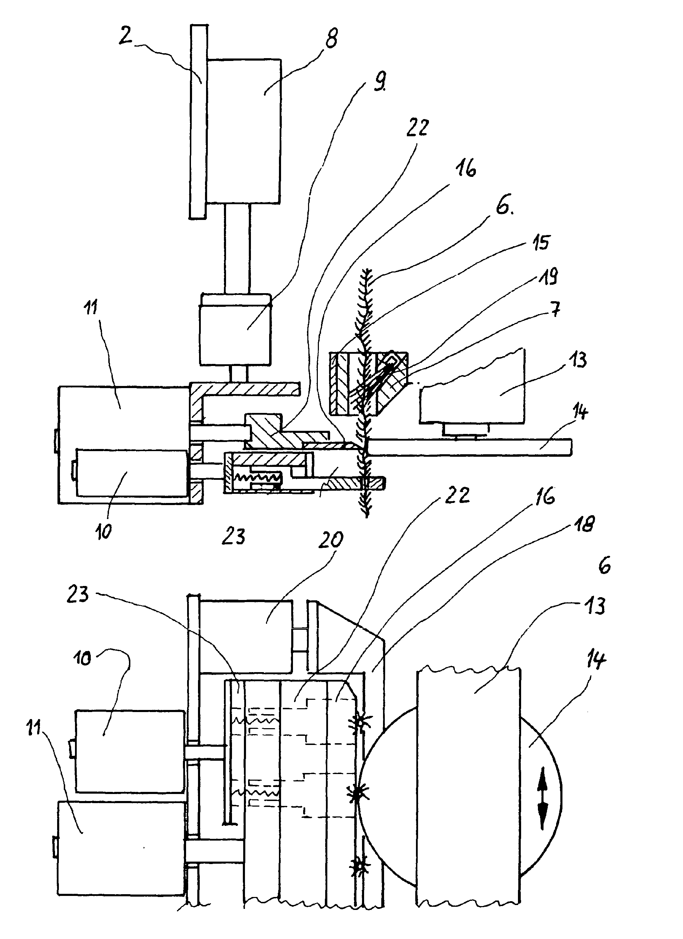

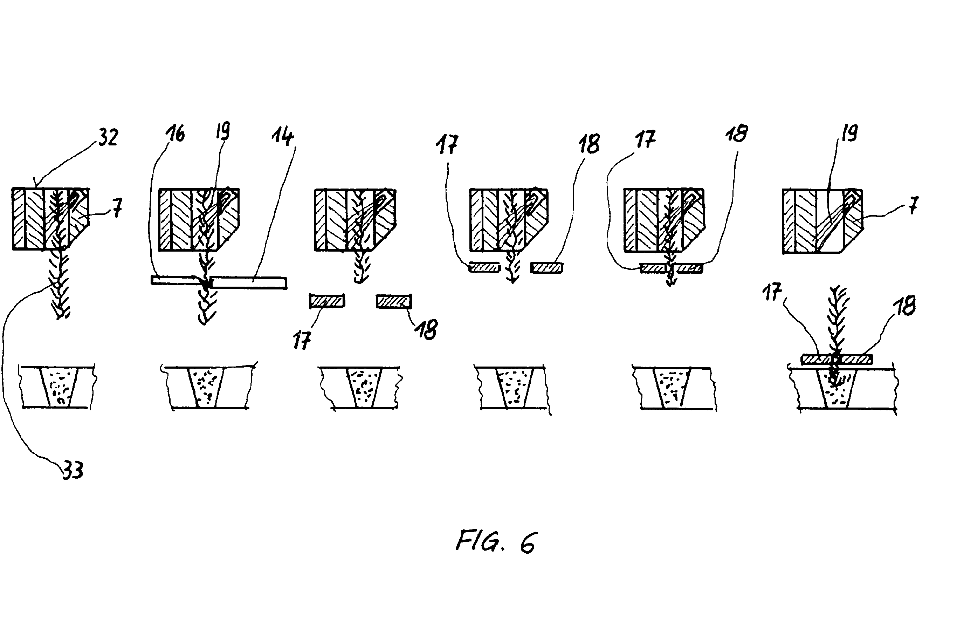

Eine Vielzahl von langen Teil oder Quirlstecklingen 6 werden von Hand, von einer Person 25 an der Steckseite (Arbeitsplatz) in die Aufnahmen 7 bis zum Anschlag 24 gesteckt. Sind alle Aufnahmen 7 auf dem Transportband 15 mit langen Stecklingen 6 an der Bedienerseite (Person 25) bestückt, taktet das Transportband mit den Aufnahmen 15, mit der entsprechenden Vielzahl von Aufnahmen 7, in die Steckposition der Anzuchtpalette 5. Die langen Stecklinge 6 werden in den Aufnahmen 7 durch schräg angebrachten Bürsten 19 festgehalten, damit diese von der Station 25 bis eigentlichen Steckstation nicht nach unten fallen können. Ist die Steck-Position erreicht fahren die gefederten Greifer 17 und der Andrückklemmbalken 18 mittels Pneumatikzylinder 10 und 12 zusammen und halten den langen Steckling fest, siehe Fig. 2, 3. Die geklemmten Stecklinge 6 werden mit dem Pneumatikzylinder 8, befestigt an einer Halterung 2, nach unten in Richtung der Anzuchtpalette 5 auf eine definierte, einstellbare Schnitthöhe aus den Aufnahmen 7 gezogen. Danach fährt das Schneidmesser 16, befestigt auf dem Messerhalter 22, mittels Pneumatikzylinder 11 (siehe Fig. 4) in die Mitte des Stecklings 6. Das Messer 16 hat eine Länge der Breite der Anzuchtpalette 5. Mittels einem Linearzylinder 13 fährt die Andrückrolle 14 für das Schneiden der Stecklinge an der Schneidkante des Messer 16 entlang und schneidet die zu steckenden Stecklinge 30 auf die definierte Länge ab. Danach werden die auf Länge geschnittenen Stecklinge, in Reihe, mittels Pneumatikzylinder 9 in die Anzuchtpalette 5 gesteckt. Ist eine Reihe gesteckt taktet die Anzuchtpalette 5 um einen Reihenabstand mit dem Taktband 3, 4 der Anzuchtplatte 5 weiter und die nächste Einheit 31 von einer Vielzahl von Aufnahmen 7 fährt in die Steckposition und der selbe Steckablauf erfolgt. Ragt ein Steckling 6 nicht mehr über der Aufnahme 7 oberhalb heraus, wird der zu kurze Steckling 28 über den Lichttaster 26 und Spiegel 27 nicht mehr registriert und mit Hilfe einer Ausblasdüse 29 ausgeblasen, nach Fig. 6. Danach wird an der Arbeitsstation der Person 25 ein neuer, langer Steckling 6 in die Aufnahme 7 bis zum Anschlag 24 gesteckt.

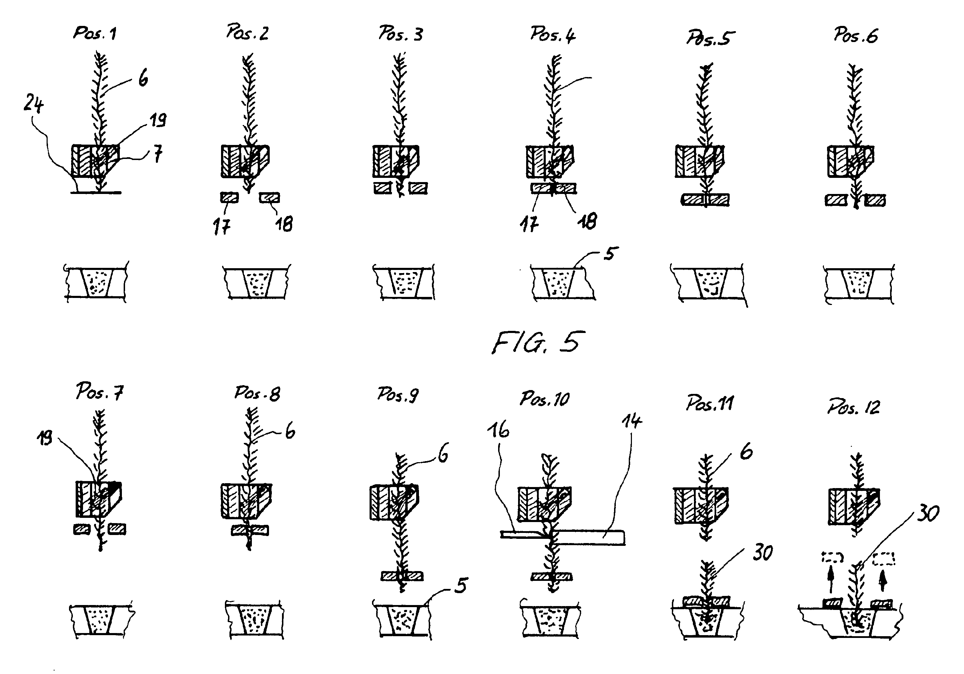

Die Fig. 5 zeigt das Takt - und Arbeitssystem bzw. Arbeitsfolgen der Vorrichtung für Teilstecklinge
Pos. 1: das Stecken der Person 25 auf den Anschlag 24
Pos. 2: die Freiheit der Stecklinge 6 zum Transport in die Schneid - und Steckstation
Pos. 3: die Position der gefederten Klemmfinger 17 und des Andrückklemmbalkens 18
Pos. 4: die Klemmposition der Stecklinge 6
Pos. 5: das Herausziehen des Stecklings 6 aus der Aufnahme 7
Pos. 6: das Öffnen der Klemmung
Pos. 7 und 8: das Nachfassen der Stecklinge zur Einstecktiefe in die Anzuchtpalette 5
Pos. 9: das Herausziehen der Stecklinge auf die Schneidlänge
Pos. 10: die Position beim Schneiden der Stecklinge
Pos. 11: Einstecken des auf Länge geschnittenen Stecklings 30 in die Anzuchtpalette 5
Pos. 12: das Öffnen des Klemmsystems und Zurückgehen in die Ausgangsposition 1

Die Fig. 6 zeigt das Takt - und Arbeitssystem der Vorrichtung für Kopfstecklinge.
Die Kopfstecklinge 33 werden in die Aufnahme 7 bis zur Oberkante 32 der Aufnahme 7 gesteckt. Der lange ungeschnittene Steckling ragt dann unterhalb der Aufnahme 7 heraus und wird auf die definierte Länge geschnitten.

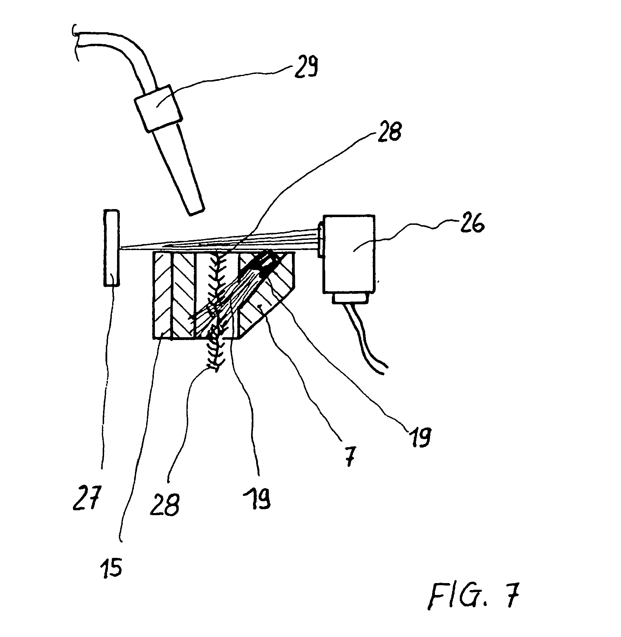

Die Fig. 7 zeigt die Ausblasvorrichtung

Die Erfindung beruht vor allem darin, daß eine Vielzahl von Stecklingen 6 auf einmal, in einer Reihe, aus langen Trieben in einer Vorrichtung bzw. einer Aufnahme auf eine definierte Länge abgeschnitten und gesteckt werden können. Weiter beruht sich die Erfindung dadurch, daß der Reststeckling 28, der nicht mehr die ausreichende Länge aufweist, registriert durch die Lichtschranke 26 und 27 t aus der Aufnahme 7 ausgeblasen wird und ein neuer, langer Steckling 6 in die Aufnahme 7 gesteckt werden kann. Weiter beruht sich die Erfindung dadurch ,dass Kopfstecklinge 33 automatisch auf Länge geschnitten und gesteckt werden. Weiter beruht sich die Erfindung dadurch, dass die Bedienungsperson 25 außerhalb der allgemeinen Schneid - und Steckvorrichtung die langen Stecklinge 6 in eine Aufnahmestation 31 stecken kann und damit eine größere Leistung und ein humaneres Arbeiten erfolgen kann.

### Bezugszeichenliste

- 1: Gestell
- 2: Halterung
- 3: Taktband der Anzuchtpalette
- 4: Mitnehmer der Anzuchtpalette
- 5: Anzuchtpalette
- 6: langer Teilsteckling, Quirlsteckling, Federsteckling
- 7: Aufnahme eines Teilstecklings
- 8: Hubzylinder für die Länge des zu steckenden Stecklings
- 9: Hubzylinder für die Länge in das Substrat
- 10: Hubzylinder für die gefederten Klemmfinger
- 11: Hubzylinder für das Messer
- 12: Hubzylinder für den Klemmbalken
- 13: Linearzylinder
- 14: Andrückrolle für das Schneiden der Stecklinge an das Messer
- 15: Transportband der Aufnahmen für die langen Teilstecklinge
- 16: Messer
- 17: gefederte Klemmfinger
- 18: Andrückklemmbalken
- 19: Bürste
- 20: Feder
- 21: Befestigungswinkel
- 22: Messerhalter
- 23: Aufnahme der Klemmfinger
- 24: Anschlag für langen Teilstecklinge
- 25: Person
- 26: Lichttaster
- 27: Spiegel
- 28: zu kurzer Steckling
- 29: Ausblasdüse
- 30: auf Länge geschnittener Steckling
- 31: Aufnahmeeinheiten
- 32: Oberkante der Aufnahme 7
- 33: ungeschnittener Kopfsteckling

## Patentansprüche

1. Vorrichtung zum Stecken von Stecklingen 30, **dadurch gekennzeichnet, dass** eine Vielzahl von Teilstecklingen 6 und Kopfstecklinge 33 mit einer Aufnahmeeinheit 31 über die gesamte Reihe der Anzuchtpalette 5 positioniert, zugeführt, auf Länge des Stecklings 30 geschnitten und in die Anzuchtpalette 5 gesteckt werden.

2. Vorrichtung nach Anspruch 1, **dadurch gekennzeichnet, dass** die Aufnahmen 7 in einer Vielzahl auf einem Förderband 15 mit der Anzahl einer Reihe der Anzuchtpalette 5 aufweist

3. Vorrichtung nach Anspruch 2, **dadurch gekennzeichnet, dass** schräg in die Aufnahmen 7 eingelegte Bürsten 19 die Stecklinge 6 festhalten.

4. Vorrichtung nach Anspruch 1, **dadurch gekennzeichnet, dass** eine Vielzahl von gefederte Klemmfingern 17 , die sich in einem Aufnahmebalken 23 befinden mittels eines Hubzylinders 10 und 11 gegen einen Klemmbalken 18 drücken und eine Einheit bilden.

5. Vorrichtung nach Anspruch 1, **dadurch gekennzeichnet, dass** das Schneiden der Stecklinge 6 über ein gerades Messer16 und über ein abrollende Andrückrolle 14 mittels eines Linearantriebs 13 geschieht.

6. Vorrichtung nach Anspruch 2, **dadurch gekennzeichnet, dass** zu kurze Stecklinge 28, erkannt durch einen Lichtsensor 26 und 27 oder Taster, mittels Luftdüse 29 aus der Aufnahme 7 geblasen werden.

## Claims

1. Device for planting cuttings 30, **characterized in that** a plurality of stem cuttings 6 and tip cuttings 33 are positioned, guided, cut to the length of the cutting 30 and inserted into the growing tray 5 with a holding device 31 over the entire row of the growing tray 5.

2. Device according to Claim 1, **characterized in that** the holding device contains holders 7 on a conveyor belt 15 in a plurality corresponding to a row in the growing tray 5.

3. Device according to Claim 2, **characterized in that** brushes 19 inserted obliquely into the holders 7 hold the cuttings 6 securely.

4. Device according to Claim 1, **characterized in that** a plurality of spring-assisted clamping fingers 17, which are present on a holding beam 23, press against a clamping beam 18 and form a unit by means of a lifting cylinder 10 and 11.

5. Device according to Claim 1, **characterized in that** the act of cutting the cuttings 6 is effected via a straight knife 16 and via a rolling pressure roller 14 by means of a linear drive 13.

6. Device according to Claim 2, **characterized in that** excessively short cuttings 28, identified by a light sensor 26 and 27 or a feeler, are blown out of the holder 7 by means of an air nozzle 29.

## Revendications

1. Dispositif pour planter des boutures (30), **caractérisé en ce que** plusieurs boutures partielles (6) et boutures de tête (33) sont placées à l'aide d'une unité de réception (31) sur une rangée complète d'une palette de culture (5), sont découpées à la longueur de la bouture (30) et sont plantées dans la palette de culture (5).

2. Dispositif selon la revendication 1, **caractérisé en ce que** l'unité de réception contiens sur une bande transporteuse (15) un certain nombre de logements (7) qui correspond à une rangée de la palette de culture (5).

3. Dispositif selon la revendication 2, **caractérisé en ce que** des brosses (19) placées obliquement dans les logements (7) maintiennent les boutures (6).

4. Dispositif selon la revendication 1, **caractérisé en ce que** plusieurs doigts élastiques de pinçage (17) situés dans une barre de réception (23) repoussent une barre de pinçage (18) au moyen d'un vérin (10) et (11) et forment une utité.

5. Dispositif selon la revendication 1, **caractérisé en ce que** la découpe des boutures (6) s'effectue au moyen d'un entraînement linéaire (13) à l'aide d'un couteau rectiligne (16) et d'un rouleau de poussée (14) en rotation.

6. Dispositif selon la revendication 2, **caractérisé en ce que** les boutures (28) trop courtes détectées par un détecteur de lumière (26) et (27) ou un palpeur sont soufflées hors du logement (7) au moyen d'un tuyère à air (29).
